(19) Europäisches Patentamt
European Patent Office
Office européen des brevets

(11) EP 3 503 559 A1

(12) EUROPEAN PATENT APPLICATION

(43) Date of publication:
26.06.2019 Bulletin 2019/26

(51) Int Cl.:
H04N 21/218 (2011.01)    H04N 21/2343 (2011.01)
H04N 21/4728 (2011.01)   H04N 21/637 (2011.01)
H04N 21/6587 (2011.01)   H04N 21/81 (2011.01)
H04N 21/845 (2011.01)

(21) Application number: 17306837.0

(22) Date of filing: 20.12.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(71) Applicant: THOMSON LICENSING
92130 Issy les Moulineaux (FR)

(72) Inventors:
• TAIBI, Charline
35576 CESSON-SEVIGNE (FR)
• BICHOT, Guillaume
35576 CESSON-SEVIGNE (FR)
• HOUDAILLE, Remi
35576 CESSON-SEVIGNE (FR)

(74) Representative: Huchet, Anne et al
InterDigital CE Patent Holdings
20, rue Rouget de Lisle
92130 Issy-les-Moulineaux (FR)

(54) **METHOD AND TERMINAL FOR MANAGING A STREAMING SESSION OF AN IMMERSIVE VIDEO SPATIALLY TILED WITH A SET OF TILES AND STORED ON A NETWORK EQUIPMENT**

(57)    A terminal for managing a streaming session of an immersive video spatially tiled with a set of tiles and stored on a network equipment available at one or more representations, a tile covering a portion of a scene of the immersive video, said immersive video being temporally divided into a plurality of video segments, a video segment being further defined by a plurality of tile segments, a tile segment being associated with a tile of the set of tiles,

comprises one or more memories (106) and one or more processors (104, 105) configured to play one or more current tile segments of a current video segment at a current representation while completing the downloading of said one or more current tile segments at the terminal (100).

FIG.2

**Description**

TECHNICAL FIELD

The present disclosure relates to the streaming of Virtual Reality (VR) immersive content (such as spherical videos, so called 360° videos, or panoramic videos) to an end device through a delivery network, and especially to a tile based video streaming.

BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Spherical video content captures a scene with a 360° angle horizontally (and 180° vertically) allowing the user to navigate (i.e. pan) within the spherical scene for which the capture point is moving along the camera motion decided by an operator/scenarist. A spherical content is obtained through a multi-head camera, the scene being composed through stitching the camera's views, projecting them onto a sphere, mapping the sphere content onto a plan (for instance through an equirectangular projection) and compressing it through conventional video encoders.

Spherical videos offer an immersive experience wherein a user can look around using an adapted end-device (such as a head-mounted display (HMD)) or can navigate freely within a scene on a flat display by controlling the viewport with a controlling apparatus (such as a mouse, a remote control or a touch screen).

Such a freedom in spatial navigation requires that the whole spherical scene is delivered to a player (embedded within the HMD or TV set) configured to extract the video portion to be visualized depending on the position of the viewport within the scene. Therefore, a high bandwidth is necessary to deliver the whole spherical video.

The majority of known solutions streaming spherical videos provides the full spherical scene to the end device, but only less than 10% of the whole scene is presented to the user. Since delivery networks have limited bandwidth, the video quality is decreased to meet bandwidth constraints.

Other known solutions mitigate the degradation of the video quality by reducing the quality of the portion of the spherical scene arranged outside of the current viewport of the end device. Nevertheless, when such viewport is moved upon user's action to a low quality area, the displayed video suffers from a sudden degradation. In such solutions, the high quality is provided only for an area visible to the end user through a viewport, at a given time.

When HTTP Adaptive streaming is used for transporting the spherical video (e.g. MPEG-DASH), for all the available representations (e.g. video quality), the spherical video is temporally divided into a plurality of video segments which are spatially split in tiles (each tile covering a portion of the scene of the spherical video). Each video segment is then defined by a set of tile segments of the same duration to cover the whole spherical scene (each tile segment being available at said different video qualities). Each segment can be decoded independently from the previous segment of any representation, which allows the player to switch representation by selecting the segment to load at each segment boundary. While not absolutely necessary, those segments are most often built having all the same duration, starting with a Random Access Point (i.e. a frame that can be decoded without the need for any other reference image).

Thus, changes of representation can occur only at specific times. In the case of a common duration D for all segments, the switching occurs only at times which are a multiple of the duration D. The duration D of a segment has an impact on the video quality as it inherently bounds a group of pictures (GOP) all linked together for providing enhanced compression. For a constrained bit rate, bigger is the group of pictures, better is the compression and thus better is the quality. To have as many video representation switching opportunities as possible, D needs to be chosen as small as possible (there is however a limit under which the quality becomes degraded).

However, the actual delay is worse than considering D only, since HTTP Adaptive Streaming requires a buffering of segments. Players have both to be robust to variations of networking conditions and to maximize the quality achievable with the current network bandwidth. To maximize the quality (when network conditions are stable), a player can select segments in a representation with an advertised bit-rate just slightly lower than the available bandwidth. In that case, required time to load one segment is slightly lower than the playing duration D of the segment.

When the network bandwidth is suddenly divided by N (i.e. the bandwidth drops down to 1/Nth of its previous value), the ongoing download of a segment (which was selected according to previous bandwidth before the drop) will take up to NxD to complete. In particular, if X% of the segment was downloaded when the network conditions changed, the remaining time to load the segment is equal to:

$$N \times D \times \frac{100 - X}{100}$$

The total download time for that segment is then equal to:

$$\frac{X \times D}{100} + N \times D \times \frac{100 - X}{100}$$

To avoid freezing the spherical video, the download of the considered segment has to be completed before that the playing time reaches the end of this segment (assuming that the playing time for each segment is constant and equal to D).

To overcome such downsides, it is well-known to use buffering, which allows to compensate for this download duration. For example, when the player has buffered two segments in advance and when the network bandwidth is suddenly halved, the player will play the two buffered segments of duration D while the next segment will be downloaded in a period equal to 2D. The player can then pursue without interruption by selecting a lower bit-rate for the next segment to load, with adaptive streaming. Then, more robustness to network variations is desired, bigger the size of the buffer needs to be.

However, when requested segments depend on the viewport position, buffered segments provide a quality for an area of the spherical video scene covered by the corresponding tile(s), chosen at the time of segment selection. There is then a delay between the decision of which area of the spherical video should be available and the moment the player will use it for display. In case of unpredicted and fast moves of the viewport during this delay, the player may need a spatial area of the spherical video scene that does not match the area provided by the buffered segment(s). Thus, during a time period roughly equal to the buffer length, the area of the scene displayed through the viewport will have a low-quality (the player uses the low-quality content instead of the buffered high-quality content), before being able to catch up with the high-quality. Indeed, if the viewport movements are more frequent than the time needed to load the correct segments in the buffer, the loss of quality (i.e. switching to the low-quality content) will occur frequently.

The present disclosure has been devised with the foregoing in mind.

SUMMARY

The present principles concern a method for managing, at a terminal, a streaming session of an immersive video spatially tiled with a set of tiles and stored on a network equipment available at one or more representations, a tile covering a portion of a scene of the immersive video, said immersive video being temporally divided into a plurality of video segments, a video segment being further defined by a plurality of tile segments, a tile segment being associated with a tile of the set of tiles,
said method comprising:

- playing one or more current tile segments of a current video segment at a current representation while completing the downloading of said one or more current tile segments at the terminal.

In an embodiment of the present principles, the method can comprise:

- determining a time to request one or more next tile segments subsequent to the one or more current tile segments.

In an embodiment of the present principles, the time to request can depend on a remaining time for completing the downloading of said one or more current tile segments.

In an embodiment of the present principles, the time for completing the downloading of said one or more current tile segments can depend on:

- a current time,
- a ratio between a bit-rate of the current representation and a current network bandwidth,
- a duration of the current video segment, and
- a percentage of data of the one or more current tile segments already received.

In an embodiment of the present principles, the time for completing the downloading of said one or more current tile segments can be defined by:

$$T_{fin} = T_{current} + N \times D \times \frac{100 - X}{100}$$

wherein:

- $T_{fin}$ is the time for completing the downloading of said one or more current tile segments,
- $T_{current}$ corresponds to the current time,
- $N \times D \times \frac{100 - X}{100}$ is a remaining time to complete the downloading of said one or more current tile segments, with:

  ▪ X being the percentage of data of the one or more current tile segments already received,
  ▪ N being the ratio between a bit-rate of the current representation and the current network bandwidth,

- D is the duration of the current video segment.

In an embodiment of the present principles, when the time for completing the downloading of said one or more current tile segments is lower than a first time threshold, the time to request can be equal to the first time threshold.

In an embodiment of the present principles, the first time threshold can be defined as follows:

$$T_0 + \alpha D - RTT$$

wherein:

- $T_0$ is a start time of playing the one or more current tile segments,
- $\alpha$ is a downloading ratio defined as to the part of the one or more tile segments to be loaded before playback,
- D is the duration of the current video segment,
- RTT is a Round Trip Time between the terminal and the network equipment.

In an embodiment of the present principles, when the time for completing the downloading of said one or more current tile segments is higher than the first time threshold but lower than a second time threshold, the time to request can be given by:

$$T_{req} = \max(T_{fin} - RTT, \quad T_{current})$$

wherein:

- $T_{req}$ is the time to request the one or more next tile segments,
- $T_{fin}$ is the time for completing the downloading of said one or more current tile segments,
- $T_{current}$ corresponds to the current time,
- RTT is a Round Trip Time between the terminal and the network equipment.

In an embodiment of the present principles, the method can further comprise, when the time to request is obtained, determining whether a next representation for the one or more next tile segments can be downloaded up to a downloading ratio, defining the part of the one or more current tile segments to be loaded before playback, before the end of the playback of the one or more current tile segments.

In an embodiment of the present principles, the next representation can have its bitrate which complies with a bitrate criterium defined as follows:

$$BR_{next} < \frac{(T_0 + D - T_{req} - RTT)}{\alpha D}$$

wherein:

- $BR_{next}$ is the bitrate of the next representation,
- $T_0$ is a start time of playing the one or more current tile segments,
- $\alpha$ is the downloading ratio defined as to the part of the one or more tile segments to be loaded before playback,
- D is the duration of the current video segment,
- RTT is a Round Trip Time between the terminal and the network equipment,
- $T_{req}$ is the time to request the one or more next tile segments.

In an embodiment of the present principles, the method can further comprise:

- skipping the one or more next tile segments when none of the available representations of the immersive video can be downloaded up to the downloading ratio, before the end of the playback of the one or more current tile segments.

In an embodiment of the present principles, the method can further comprise:

- when the one or more next tile segments are skipped, requesting one or more subsequent tile segments following the one or more next tile segments skipped, at a time to request defined by:

$$T_{req} = T_0 + (1 - \alpha) \times D - RTT$$

wherein:

- $T_0$ is a start time of playing the one or more current tile segments,
- $\alpha$ is the downloading ratio defined as to the part of the one or more tile segments to be loaded before playback,
- D is the duration of the current video segment,
- RTT is the Round Trip Time between the terminal and the network equipment.

The present principles also concern a terminal for managing a streaming session of an immersive video spatially tiled with a set of tiles and stored on a network equipment available at one or more representations, a tile covering a portion of a scene of the immersive video, said immersive video being temporally divided into a plurality of video segments, a video segment being further defined by a plurality of tile segments, a tile segment being associated with a tile of the set of tiles,
said terminal comprising one or more memories and one or more processors configured to play one or more current tile segments of a current video segment at a current representation while completing the downloading of said one or more current tile segments at the terminal.
In an embodiment of the present principles, the one or more processors can be further configured to determine a time to request one or more next tile segments subsequent to the one or more current tile segments.
In an embodiment of the present principles, the time to request can depend on a time for completing the downloading of said one or more current tile segments.
In an embodiment of the present principles, when the time for completing the downloading of said one or more current tile segments is lower than a first time threshold, the time to request can be equal to the first time threshold.
Besides, the present principles are further directed to a non-transitory program storage device, readable by a computer, tangibly embodying a program of instructions executable by the computer to perform a method for managing, at a terminal, a streaming session of an immersive video spatially tiled with a set of tiles and stored on a network equipment available at one or more representations, a tile covering a portion of a scene of the immersive video, said immersive video being temporally divided into a plurality of video segments, a video segment being further defined by a plurality of tile segments, a tile segment being associated with a tile of the set of tiles,
said method comprising:

- playing one or more current tile segments of a current video segment at a current representation while completing the downloading of said one or more current tile segments at the terminal.

The present disclosure also concerns a computer program product which is stored on a non-transitory computer readable medium and comprises program code instructions executable by a processor for implementing a method for managing, at a terminal, a streaming session of an immersive video spatially tiled with a set of tiles and stored on a network equipment available at one or more representations, a tile covering a portion of a scene of the immersive video, said immersive video being temporally divided into a plurality of video segments, a video segment being further defined by a plurality of tile segments, a tile segment being associated with a tile of the set of tiles,

said method comprising:

- playing one or more current tile segments of a current video segment at a current representation while completing the downloading of said one or more current tile segments at the terminal.

The method according to the disclosure may be implemented in software on a programmable apparatus. It may be implemented solely in hardware or in software, or in a combination thereof.

Some processes implemented by elements of the present disclosure may be computer implemented. Accordingly, such elements may take the form of an entirely hardware embodiment, an entirely software embodiment (including firmware, resident software, micro-code, etc.) or an embodiment combining software and hardware aspects that may all generally be referred to herein as "circuit", "module" or "system". Furthermore, such elements may take the form of a computer program product embodied in any tangible medium of expression having computer usable program code embodied in the medium.

Since elements of the present disclosure can be implemented in software, the present disclosure can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like.

The disclosure thus provides a computer-readable program comprising computer-executable instructions to enable a computer to perform the method as above mentioned.

Certain aspects commensurate in scope with the disclosed embodiments are set forth below. It should be understood that these aspects are presented merely to provide the reader with a brief summary of certain forms the disclosure might take and that these aspects are not intended to limit the scope of the disclosure. Indeed, the disclosure may encompass a variety of aspects that may not be set forth below.

BRIEF DESCRIPTION OF THE DRAWINGS

The disclosure will be better understood and illustrated by means of the following embodiment and execution examples, in no way limitative, with reference to the appended figures on which:

- Figure 1 is a schematic diagram of an exemplary Client-Server network architecture wherein the present principles might be implemented;
- Figure 2 is a schematic block diagram of an exemplary client terminal wherein the present principles might be implemented;
- Figure 3 is an exemplary delivery system wherein the present principles can be implemented;
- Figure 4 shows an exemplary tile comprising a viewport according to the present principles;
- Figures 5 and 6 show an exemplary tile of set of tiles covering an immersive video compliant with the present principles;
- Figure 7 is schematic diagram of an exemplary method used by some embodiments of the present principles for managing streaming of tile based immersive video;
- Figure 8 is a time diagram showing the managing of segment requests within an adaptive streaming session using buffering according to a known solution;
- Figure 9 is an exemplary time diagram showing the managing of segment requests within an adaptive streaming session according to the present principles;
- Figure 10 illustrates the latest time to receive a segment of an adaptive streaming session which can be played up to its end according to the present principles:
- Figure 11 is a zoom of Figure 9 showing the start of downloading of a segment according to the present principles;
- Figure 12 is an exemplary time diagram wherein an abortion of a current segment which cannot be displayed up to its end is illustrated, according to the present principles.

Wherever possible, the same reference numerals will be used throughout the figures to refer to the same or like parts.

DETAILED DESCRIPTION

The following description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

In the claims hereof, any element expressed as a means and/or module for performing a specified function is intended to encompass any way of performing that function including, for example, a) a combination of circuit elements that performs that function or b) software in any form, including, therefore, firmware, microcode or the like, combined with appropriate circuitry for executing that software to perform the function. It is thus regarded that any means that can provide those functionalities are equivalent to those shown herein.

In addition, it is to be understood that the figures and descriptions of the present disclosure have been simplified to illustrate elements that are relevant for a clear understanding of the present disclosure, while eliminating, for purposes of clarity, many other elements found in typical digital multimedia content delivery methods, devices and systems. However, because such elements are well known in the art, a detailed discussion of such elements is not provided herein. The disclosure herein is directed to all such variations and modifications known to those skilled in the art.

The present disclosure is depicted with regard to a streaming environment to deliver an immersive video (such as a spherical video or a panoramic video) to a client terminal through a delivery network.

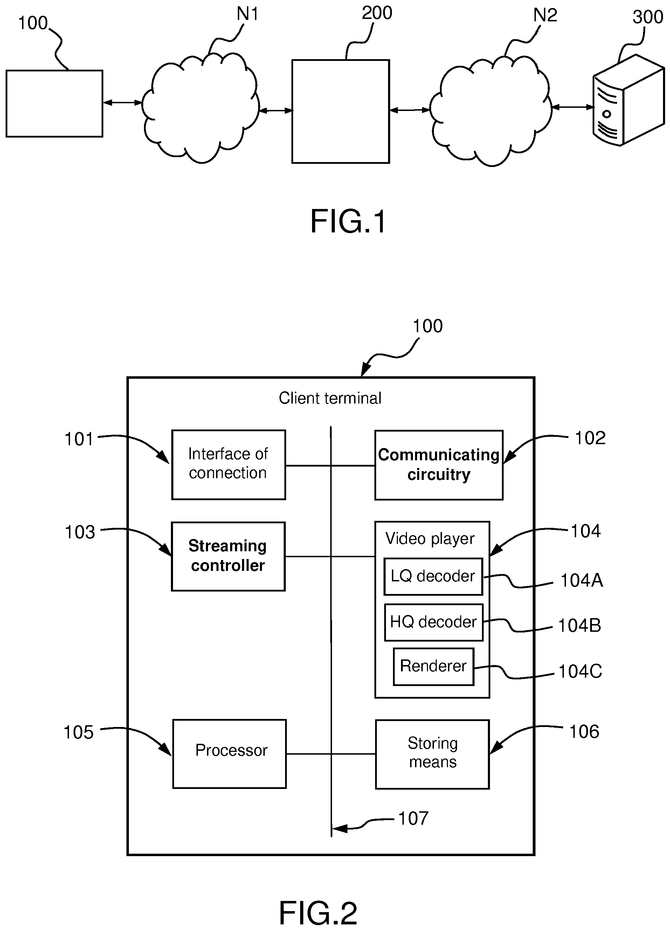

As shown in the example of Figure 1, the Client-Server network architecture, wherein the present principles might be implemented, comprises a client terminal 100, gateway 200 and one or more servers 300 (only one is represented in Figure 1).

The client terminal 100 - connected to the gateway 200 through a first network N1 (such as a home network or an enterprise network) - may wish to request an immersive video 10 stored on a network equipment 300 (e.g. a remote server) through a second network N2 (such as the Internet network). The first network N1 is connected to the second network N2 thanks to the gateway 200.

The server 300 streams segments of the immersive video 10 to the client terminal 100, upon the client request, using a streaming protocol. In the following, as an illustrative but non-limitative example, adaptive streaming (such as the HTTP adaptive streaming protocol, so called HAS, like MPEG-DASH or HLS) is considered to deliver the immersive video 10 to the client terminal 100 from the server 300.

As shown in the example of Figure 2, the client terminal 100 can comprise at least:

- an interface of connection 101 (wired and/or wireless, as for example Wi-Fi, Ethernet, 4G, etc.) to the first network N1;
- a communication circuitry 102 containing the protocol stacks to communicate with the server 300. In particular, the communication module 102 comprises the TCP/IP stack well known in the art. Of course, it could be any other type of network and/or communicating means enabling the client terminal 100 to communicate with the server 300;
- a streaming controller 103 which receives the immersive video 10 from the server 300;
- a video player 104 adapted to decode and render the immersive content. In particular, the video player 104 can comprise a low-quality decoder 104A for decoding a low-quality stream as described hereinafter, a high-quality decoder 104B and a renderer 104C for processing decoded streams;
- one or more processor(s) 105 for executing the applications and programs stored in a non-volatile memory of the client terminal 100. In some embodiments, the video player 104 can be operated at least partially by these processors 105;
- storing means 106 such as a volatile memory, for instance for buffering the segments received from the server 300 before their transmission to the video player 104;
- an internal bus 107 to connect the various modules and all means well known to the skilled in the art for performing the generic client terminal functionalities.

As an example, the client terminal 100 is a portable media device, a mobile phone, a tablet or a laptop, a head mounted device, a TV set, a set-top box or the like. Naturally, the client terminal 100 might not comprise a complete video player, but only some sub-elements such as the ones for demultiplexing and decoding the media content and might rely upon an external means to display the decoded content to the end user.

According to the present principles, the client terminal 100 (e.g. via its player 104) can manage two parallel adaptive streaming sessions:

- one high-quality streaming session for providing a portion of the scene of the immersive video intended to cover an area of the scene displayed through the viewport VP in high-quality. The high-quality decoder 104B can be in charge of processing the high-quality streaming session; and
- one low-quality streaming session for providing a fallback low-quality content when the viewport position does not match the portion of the scene available in high-quality. It is assumed that the low-quality streaming session provides the whole scene (spherical scene or panoramic scene) of the immersive video 10 and is delivered in time to the player 104 whatever the quality, when possible. The low-quality decoder 104A can operate the low-quality streaming session;

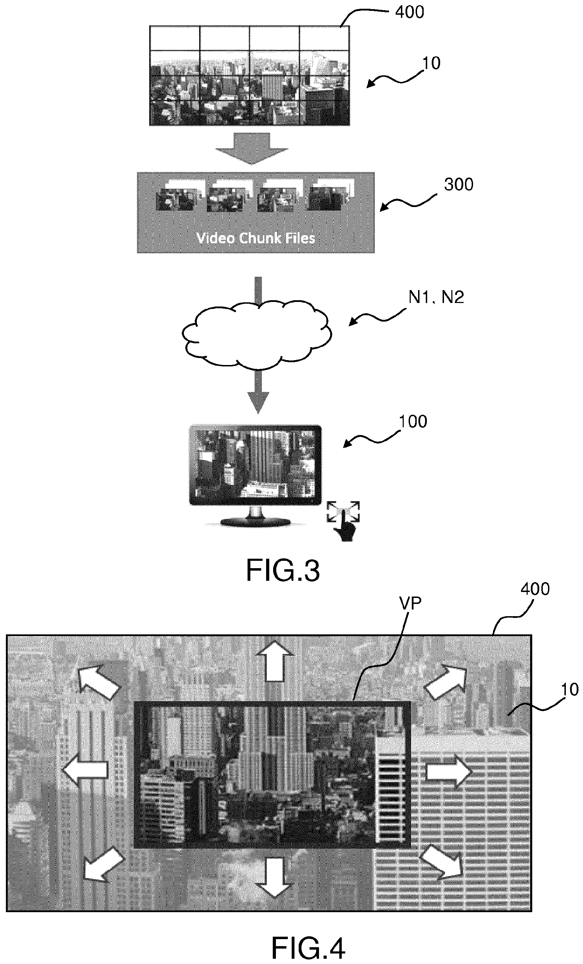

The high-quality streaming session can be a tile based video service, as depicted in Figure 3. In a tile based video service, the immersive video 10 (in the shown example of Figure 3, a panoramic video) is spatially sliced into a set of tiles at the server side. The set of tiles covers the whole scene of the immersive video 10. The size of the tiles can be defined large enough to allow a variation of the focusing point without being forced to obtain and decode instantaneously another tile. In particular, in the following, it is assumed that one tile delivered to the terminal 100 can cover at least the part of scene (a spherical scene or a panoramic scene) to be displayed through the viewport VP associated with the client terminal 100 requesting the immersive video 10 (as shown in the example of Figure 4 compliant with the present principles), so that one tile segment is needed. Naturally, in a variant, when tiles are smaller than the viewport VP, several tiles might be needed to obtain the part of the scene displayed through the viewport VP, so that several tile segments have to be concurrently requested and downloaded to be merged before display.

In addition, the immersive video 10 can be already formatted for adaptive streaming. In that case, the immersive video 10 is temporally divided into a plurality of video segments of equal duration, each video segment being available at different video qualities (also called representations) at the server 300.

For all the available video qualities, each video segment of the immersive video 10 is spatially split in tiles 400 (each tile covering a portion of the scene (spherical scene or panoramic scene) as illustrated in Figures 3 to 6) according to the same tile arrangement. Each video segment is then defined by a set of tile segments of the same duration to cover the whole spherical scene (each tile segment being available at said different video qualities). Every tile segment - comprising a plurality of coded video frames - is of equivalent duration. Each video frame of a video segment is obtained from the video frames of the corresponding tile segments defining said video segment.

In the following, for conciseness reason, a segment refers to a video segment, a tile segment or one or more tile segments of a same current video segment.

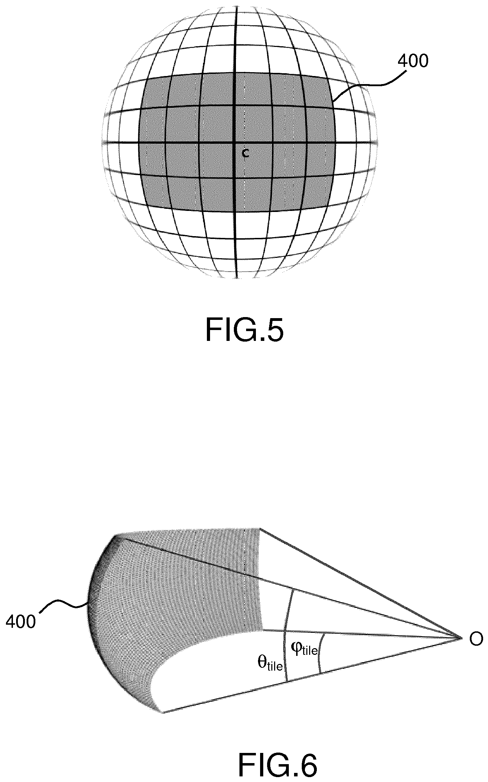

While not mandatory, it is further assumed that an overlap exists between consecutive tiles 400 of the set of tiles. Naturally, while a tile of rectangular shape has been illustrated in Figures 4, the present principles can be applied to any other type of tile shape such as the one shown in Figures 5 and 6.

According to the present principles, distinct buffering strategies can be applied to these two adaptive streaming sessions (high and low-quality sessions):

- for the low-quality fallback stream, a large buffer is used to compensate for any reasonably expected network degradation. Said buffer can for instance be embedded within the low-quality decoder 104A or can be operated by the storing means 106. The size of the buffer is several times the duration of a segment;
- for the high-quality stream, no buffering of a whole segment is implemented to be able to select the high-quality portion very shortly before using the corresponding segment for display.

In particular, the buffering of the high-quality stream can be chosen as short as the minimal needs for the high-quality decoder 104B, without exceeding the duration of a segment.

To that end, in an embodiment according to the present principles, a segment duration D can be chosen as small as possible to minimize the switching delays while keeping a reasonable compression quality. The limitation to shortening the duration D comes from the need to make segments independently decodable. To that end, they need to start with a Random Access Point, such as an IDR (Instantaneous Decoder Refresh) frame. These frames are less efficiently encoded than motion predictive pictures (such as P-frames or B-frames), and their frequency in the video stream impact the overall bit-rate significantly. In an illustrative and non-limitative example, the segment duration D can be equal to 500ms, considering an immersive video delivered at frame rate of 30fps (frames per second) in normal conditions. In this illustrative example, each segment comprises 15 frames: the first frame is an IDR frame which corresponds to roughly half of the volume of the segment data.

For decoding of a segment, at least its first frame (i.e. the IDR) is needed. Encoding schemes usually comprise bi-predictive frames (so called B frames which are Bi-directionally predicted frames, coded based on both previous and future coded frames) inserted between one-predictive frames (so called P-frames which are Predictively coded frames, coded based on previously coded frame).

For instance, IBBPBBPBBPBBPBP (display order) is an encoding scheme where B frames may use the previous I or P frame and the next P frame for prediction and P frames use the previous I or P frame. In this example, the player 104 needs to acquire the first I frame (Intra-coded frame, coded independently of all other frames) with the first P frame, before being able to decode the first B frame. Since the P and B frames are much smaller than the I frame, the data size to be downloaded before starting the decoding can roughly correspond to half of the volume of the segment data.

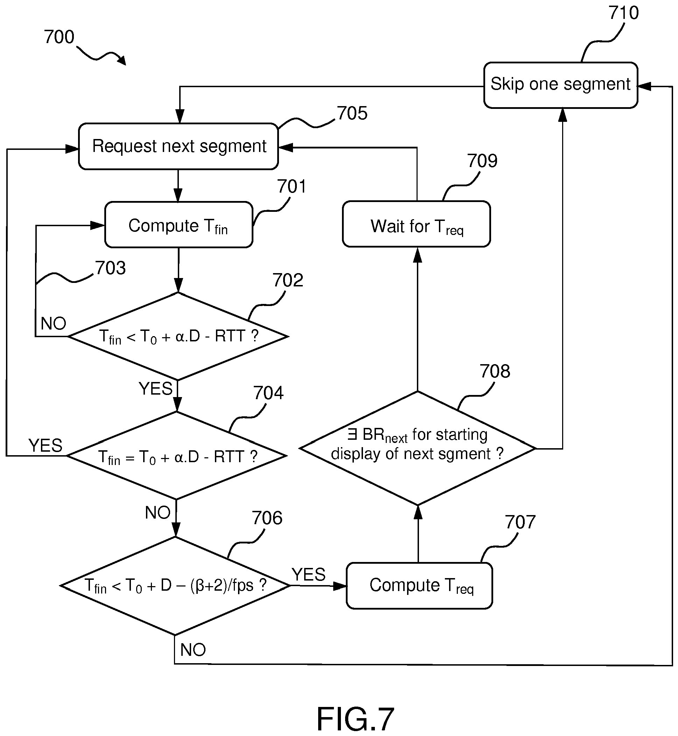

As shown in Figure 7, the client terminal 100 (e.g. via its player 104 and/or the processors 105) is configured to implement the method 700 for managing an adaptive streaming session of a high-quality stream of an immersive video 10.

In the following, it is assumed that half of the data of a segment needs to be downloaded before being able to start decoding it by considering the exemplary encoding scheme IBBPBBPBBPBBPBP (as it provides minimal difference between delivery order of frames (corresponding to decoding order) and display order). Obviously, the present principles can also be implemented with any other encoding schemes (but in the worst case, the entire segment needs to be received before being able to display the second frame).

When expecting stable network conditions, downloading half of a segment takes a duration D/2. The video player 104 can delay its decision about which segment should be requested at a time around D/2 before the end of playback of the current segment. In particular, the player 104 should measure the RTT (Round Trip Time) with the server 300, since the data will start arriving after the RTT. A more accurate time to select and request the next segment S2 can be:

$$T_0 + \frac{D}{2} - RTT$$

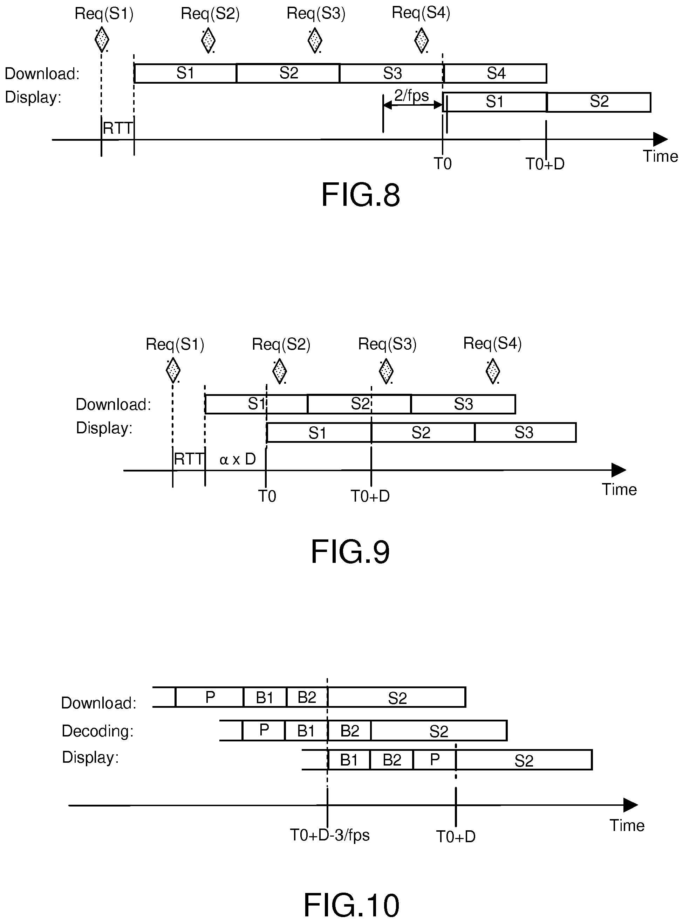

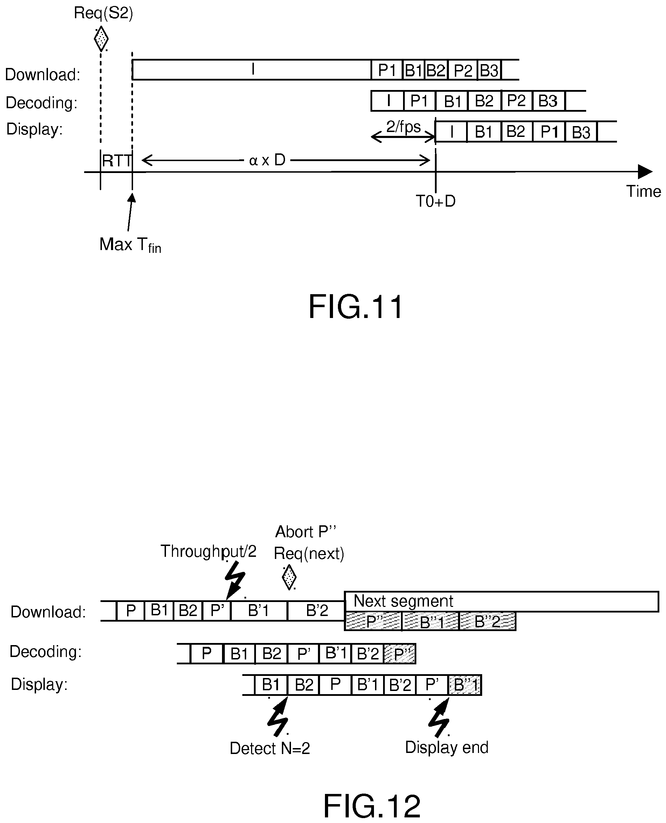

wherein $T_0$ is the start time of playing a current segment S1 (as shown in Figures 9 and 11).

For example, when D=500ms and RTT=50ms, the tile selection can be done 200ms after the start of the current segment S1, i.e. as late as 300ms before the segment change. Compared with a traditional HAS buffering of 3 segments (as shown in Figure 8), where the switching delay would be around 1500ms, the switching delay can be reduced by a factor of 5 according to the present principles (a delay of 300ms being really short for the human perception).

According to the present principles, the player 104 can process whatever data (from the high-quality stream or the low-quality stream) is available thanks to the appropriate decoder (either the high-quality decoder 104B or the low-quality decoder 104A). When the high-quality decoder 104B cannot provide a decoded frame in due time, it can inform the player 104 so that its output is temporarily ignored, only the output from the low-quality stream being used by the decoder 104A.

With the zero-buffering strategy of the present principles, the current segment S1 of high-quality stream can still be downloading (by the content terminal implementing the method 700) while a first part of said current segment S1 is already displayed.

When the network conditions change (e.g. the network bandwidth drops), the download of the current segment S1 can be slowed down and, at some point in time, the client terminal 100 can determine that the display of the current segment S1 in high-quality up to the end becomes impossible (for lack of data in due time). In such a case, the client terminal 100 (e.g. via the player 104) can either:

- stop the current downloading (e.g. by closing a TCP connection, by performing small byte-range requests in a pipeline that can then be interrupted, or by using a protocol such as HTTP/2 which allows control of the streams) as described hereafter; or
- consider the option of immediately starting the download of a further segment S3 (by skipping the next segment S2 subsequent to the current segment S1) of high-quality, taking the new network bandwidth into account in the segment selection. During an additional time (limited to the segment duration D) following the remaining time for processing current segment S1, the high-quality content will then not be available, so that the display can suffer from a quality reduction (the low-quality stream will be used by the player 104).

*Time for completion of the download of the currently downloading segment*

According to the present principles, to take its decisions, the player 104 of the client terminal 100 needs to obtain, in a step 701, the expected end of the download of the currently downloading segment. The time for completion of reception of the currently downloading segment is defined by the following equation:

$$T_{fin} = T_{current} + N \times D \times \frac{100 - X}{100}$$

wherein:

- $T_{current}$ corresponds to the current time, i.e. the time when computations are performed before taking a decision. $T_{current}$ also corresponds to the display time;
- $N \times D \times \frac{100 - X}{100}$ is the remaining time to complete the download of the currently downloading segment, with:

  - X being the percentage of data already received at time $T_{current}$. X is a number from 0 to 100;
  - N being the ratio between the bit-rate of the currently downloading segment and the current network bandwidth. The bit-rate of the currently downloading segment was selected when choosing the representation for the currently downloading segment such as it matches the network bandwidth at that time. Representations provide a discrete set of bit-rate values, so that the largest one which fits the expected bandwidth is selected.

*Time limit for decoding and playing the current segment S1*

When the currently downloading segment corresponds to the current segment S1 (i.e the segment which is played and displayed by the client terminal 100), the download of the currently downloading segment needs to be completed before the end of the segment duration D. How much before the end of the segment duration D depends on the encoding scheme.

For example, when the GOP (Group Of Pictures) of the current segment S1 ends with the frames PBBP (in display order) with each B frame being predicted by using both P frames, the frame transmission order in the stream becomes PPBB (the last P frame has to be received before being able to decode the last B frames).

As shown in Figures 10 and 11, the last P frame is displayed at time $T_0 + D - \frac{1}{fps}$ (fps being the frame rate, i.e. the number of frames per second of the video) but will be available in advance. The last B frame needs to be displayed at time $T_0 + D - \frac{2}{fps}$ (and the previous B frame at time $T_0 + D - \frac{3}{fps}$ ).

More generally, by taking into account the time for decoding, to be able to display the last B frame, the player 104 needs to receive data ahead of display time. To that end, it is further assumed that the last B frame data to be decoded roughly needs to be provided to the player 104 (in particular its decoder 104B) as soon as the previous frame is ready for display. Then, the last B frame needs to be received at the following time (which is the maximum limit for reception of the current segment S1):

$$T_0 + D - \left(\frac{\beta}{fps} + \frac{2}{fps}\right)$$

wherein $\beta$ is the number of reference frames used by the last decoded frame of the GOP which have a display time after the display time of this last decoded frame. For instance:

- when the encoding scheme uses only references that occur sooner in the display order (e.g. when using only P frames, such as IPPPPPPPPP), then the last decoded frame has no reference frame displayed after it, so that $\beta=0$;
- when the encoding scheme uses B frames referencing the previous I or P frame and the next P frame (e.g. the display order IBBPBBP), then the last decoded frame is a B frame, referencing the last displayed P frame, so that $\beta=1$;
- when considering a GOP with n frames P and m frames B which ends with the frames $P_{n-1}B_{m-1}B_mP_n$ wherein the frame $B_{m-1}$ can be predicted using both frames $B_m$ and $P_n$ as references (n and m being integers) displayed after the frame $B_{m-1}$, then $B_{m-1}$ is the last decoded frame, so that $\beta=2$.

Thus, in the above example (i.e. the GOP ends with PBBP (in display order) with each B frame being predicted by using both P frames), $\beta=1$ so that the last B frame has to be received at the time:

$$T_0 + D - \frac{3}{fps}$$

Besides, the remaining delay from the current time $T_{current}$ to receive the currently downloading segment is then given by the following formulae:

$$T_0 + D - \left(\frac{\beta}{fps} + \frac{2}{fps}\right) - T_{current}$$

With the exemplary GOP, $\beta=1$ and the remaining delay from current time becomes:

$$T_0 + D - \frac{3}{fps} - T_{current}$$

*Margin to play the next segment*

To be able to play the next segment S2 (subsequent to the current segment S1), the client terminal 100 needs to download enough of its data before reaching the time for beginning the display of the next segment S2. In particular, with the exemplary GOP IBBPBBPBBPBBPBP as previously described, the client terminal 100 needs to receive the first I frame to decode before the time:

$$T_0 + D - \frac{1}{fps}$$

Moreover, in this example, the first B frame to decode needs to be received at time $T_0 + D$. Since this first B frame refers to the first P frame, this first P frame and this first B frame have to be received at that time $T_0 + D$.
When the current segment S1 is downloading, the available margin to download this needed part of the next segment S2 (i.e. frames IPB in the example) is the time between $T_{fin}$ and $T_0 + D$ (which corresponds to the end of the playback of the current segment S1), i.e.:

$$margin = T_0 + D - T_{current} - N \times D \times \frac{100-X}{100}$$

In addition, when requesting a segment, the Round Trip Time (RTT) needs to be taken into account if the

$$N \times D \times \frac{100-X}{100} < RTT$$

remaining time to complete the current segment S1 download is lower than the RTT (i.e. ). Otherwise (i.e. the RTT is not considered, the remaining time to complete the download of the current segment S1 being higher that the RTT), the request for the next segment S2 can be sent early enough so that the reception of current segment S1 and the next segment S2 can be performed without any interruption (i.e. HTTP requests pipelining is advantageously used when considering HTTP adaptive streaming).

Thus, when $N \times D \times \frac{100-X}{100} < RTT$ (i.e. the RTT is taken into account), the available margin to download the needed part of the next segment S2 is reduced to:

$$margin = T_0 + D - T_{current} - RTT$$

In case the available margin is negative, the reception of the next segment S2 in time for starting its display is impossible.
In addition, even if the available margin is positive, the margin can still be too small to allow the downloading of the needed part of the next segment S2. Indeed, for a given bitrate $BR_{next}$ of the next segment S2, the downloading of the size of the next segment part that needs to be loaded to begin the segment decoding and display (also referenced as *Displayable_segment_prefix* hereinafter) is defined as follows:

$$BR_{next} \times \alpha D$$

wherein $\alpha$ is defined as the part of a segment that needs to be loaded to begin the segment decoding and display (also called needed part) and corresponds to (considering the exemplary GOP):

$$\alpha = \frac{Size(I) + Size(B) + Size(P)}{Total\_segment\_size} = \frac{Displayable\_segment\_prefix}{Total\_Segment\_size}$$

with $0 \leq \alpha \leq 1$.

The time needed to download Displayable_segment_prefix with the current networking conditions is further defined by:

$$\frac{Displayable\_segment\_prefix}{Current\ Bandwidth}$$

It should be understood that short duration segments (e.g. 500ms) can have I frame consuming a little bit less than 50% of the total size of the segment, so that in an illustrative example, it can be assumed that half of the segment data is needed to be able to start playing it (which corresponds to $\alpha = \frac{1}{2}$). Remaining P and B frames of the exemplary GOP correspond to the remaining part of segment data (i.e. *Total_segment_size - Displayable_segment_prefix*), which are received at a rate about $\frac{1}{1-\alpha}$ the fps (i.e. they arrive faster than needed for display).

When an available representation (i.e. a bit-rate) for the next segment S2 meets the following criterium:

$$\frac{BR_{next} \times \alpha D}{Current\_Bandwidth} < margin$$

then the needed part of the next segment S2 to begin the decoding can be downloaded in time for decoding and display.

*Player strategy without download aborting*

In a first embodiment of the present principles, HTTP/1.1 requests are used for the whole segment without any possibility for aborting a requested download.

The client terminal 100 (e.g. via the player 104, the streaming controller 103 and/or processors 105) can determine (at step 701) the time for completion of the download of the currently downloading segment $T_{fin}$. In particular, the time $T_{fin}$ can be continuously (i.e. often enough) or regularly obtained to take into account the variations of the network bandwidth. For example, the determination of time $T_{fin}$ can occur after each received TCP packet or every few milliseconds.

At step 702, the client terminal 100 can then compare $T_{fin}$ with $T_0 + \alpha D - RTT$.

When $T_{fin} < T_0 + \alpha D - RTT$ (i.e. the normal case), the client terminal 100 can wait (step 703) for time $T_0 + \alpha D - RTT$ to request at that time the next segment S2. When $T_{fin} = T_0 + \alpha D - RTT$ (at step 704), the client terminal 100 can request the next segment in step 705. In that case, both current segment S1 and next segment S2 will be at the highest quality available for their respective networking conditions.

When $T_0 + \alpha D - RTT < T_{fin}$, the client terminal 100 can compare $T_{fin}$ with $T_0 + D - \frac{\beta+2}{fps}$ in a step 706. When $T_{fin} < T_0 + D - \frac{\beta+2}{fps}$, the client terminal can still play the whole current segment S1 with high quality, but it needs to check how to process the next segment S2. To that end, the client terminal can determine, in a step 707, the time to send the request for the next segment S2.

Because the deadline is short (the player is in a hurry), the player 104 needs to receive the next segment S2 the soonest possible after the current one. To that end, the client terminal 100 can determine the maximum between $T_{fin}$ - RTT and the current time $T_{current}$, which defines the time $T_{req}$ to request the next segment S2, namely:

$$T_{req} = \max(T_{fin} - RTT, \qquad T_{current})$$

Once the time of request is obtained, the client terminal 100 (e.g. via its player 104 and/or streaming controller 103) can determine, in a step 708, a representation (associated with a bit-rate $BR_{next}$) that can be downloaded up to a ratio $\alpha$ before time $T_0$ + D. This representation needs to comply with the following bitrate criterium:

$$BR_{next} < \frac{Current\_Bandwidth \times (T_0 + D - T_{req} - RTT)}{\alpha D}$$

When such a representation exists (i.e. its associated bit-rate meets the bitrate criterium), then the client terminal can wait (step 709) to request this representation at the time $T_{req}$ previously obtained (step 705) .

When no representation complies with the bitrate criterium, the next segment S2 cannot be ready for playing at its start time $T_0$ + D, so the client terminal decides (step 710) to skip the display of the next segment S2 (and uses the low-quality stream as a fallback option). In that case, several strategies can be applied by the client terminal 100:

- one first strategy is to request the subsequent segment S3 (following the next segment S2 which cannot be downloaded) at time $T_{req}$ defined by:

$$T_{req} = T_0 + (1 - \alpha) \times D - RTT$$

and to select the representation matching the network bandwidth at that time;

- one second strategy consists in checking whether a representation for the subsequent segment S3 with higher quality (than the quality which can be obtained with the current network bandwidth) can be downloaded thanks to the additional delay obtained by skipping the next segment S2. This second strategy makes sense when the client terminal expects that the network quickly reaches its previous network bandwidth, by selecting a representation with a quality at most equal to the quality of the current segment S1 (the expected quality can be constant except for the skipped segment). It should be understood that this second strategy can be inadequate when the network stays at current (low) bandwidth, because a very low quality will be used for the skipped segment (i.e. the low-quality stream), then a very high quality for the subsequent segment S3 and then again a low quality fitting the (low) network bandwidth at that time.

In a third case, when $T_{fin}$ is too far in time (e.g. $T_{fin} > T_0 + D - \frac{\beta+2}{fps}$), the current segment S1 itself cannot be played up to its end (the high-quality decoder 104B will not be able to provide a video frame for the correct timing, so that the player will have to stop using the high-quality segment to switch to the low-quality stream). In that case, the time remaining to download the next segment S2 is at most $\frac{\beta+2}{fps}$ which is too short to be able to receive and decode in time the needed part of the next segment S2 to start its playback. The current segment S1 will then not be fully usable for the high-quality and at least the next segment S2 - which cannot be downloaded in time - will be skipped (subsequent segments can further be skipped in case of low network bandwidth) in step 710.

*Player strategy with download aborting*

In a second embodiment of the present principles, the current download of a segment can be aborted. This can be achieved by using an appropriate underlying transport protocol (e.g. HTTP/2) or by using a pipeline of small byte-range requests or any other similar technique. The client terminal 100 (e.g. via the player 104) has then the possibility to adapt and adjust its behavior when the current segment S1 and/or the next segment S2 cannot be downloaded in due time.

In that second embodiment, the download of the current segment S1 can be stopped to avoid disrupting the next segment S2.

The second embodiment differs from the first one in that, when $T_{fin}$ is too far (e.g. $T_{fin} > T_0 + D - \frac{\beta+2}{fps}$ ), the current segment S1 itself cannot be played up to its end (the decoder 104B will not be able to provide a video frame for the correct timing since the corresponding data are not received yet, so that the player will have to stop using the high-quality segment to switch to the low-quality stream) and the client terminal 100 can assess how long it wants to continue playing it.

Since the downloading of the current segment S1 can be cancelled, the client terminal 100 has more or less time to download the next segment S2, depending on the time the download of the current segment is stopped. If there is not enough time for being able to play the next segment S2, the later can be entirely skipped. When the client terminal 100 looks for obtaining a high overall quality for the current and the next segment S2 together, the client terminal may give up some playing time of the current segment S1 to ensure a high quality of playing time for the next segment S2. To that end, the client terminal needs to determine a maximum playing time $T_{max}$.

Thus, at any future time T, the player shall have displayed floor $((T - T0) \times fps)$ frames (floor being a function returning the greatest integer at most equal to the argument of the function), which is a linear function of time.

Considering that X% of the segment volume has already been downloaded, and because the segment is playing, $X > 100 \times \alpha$. The client terminal 100 (e.g. via its player 104) needs to determine the number of frames downloaded at any future time $T$.

When assuming that P and B frames have roughly the same data size, the download is also a linear function of time loading $fps_{downlaod}$ frames per second (at least equal to $\frac{fps}{N}$ ) from $T_{current}$ to T. At $T_{current}$, the client terminal 100 has already downloaded the *Displayable_segment_prefix* (in the exemplary GOP, I, P and B frames) and $\left(\frac{X}{100} - \alpha\right) \times D \times fps$ P and B frames (between $T_0$ and $T_{current}$), and will download $(T - T_{current}) \times fps_{downlaod}$ additional frames at time T. In case it is useful to make a distinction between P and B frames, the client terminal 100 needs to determine their respective loading rate depending on their weight and the respective number of P and B frames. To that end, the client terminal 100 should have the information of the encoding scheme.

Besides, the client terminal 100 should take into account the need to receive the last frame $\frac{\beta+2}{fps}$ before the time to display said last frame.

Thus, the maximum playing time $T_{max}$ is then given by the following equation:

$$displayed\_pictures\ (T_{max}) = downloaded\_pictures\ \left(T_{max} - \frac{\beta+2}{fps}\right)$$

which can be expanded into:

$$(T_{max} - T_0) \times fps$$
$$= M + \left(\frac{X}{100} - \alpha\right) \times D \times fps + \left(T_{max} - \frac{\beta+2}{fps} - T_{current}\right) \times fps_{download}$$

and leads to the following maximum time $T_{max}$ (corresponding to the time until which the display of the current segment S1 is possible):

$$T_{max} = \frac{\left(T_0 + \frac{M}{fps} + \left(\frac{X}{100} - \alpha\right) \times D - \left(\left(\frac{\beta+2}{fps} + T_{current}\right) \times \frac{fps_{download}}{fps}\right)\right)}{\left(1 - \frac{fps_{download}}{fps}\right)}$$

with M being the number of images comprised in the *Displayable-segment_prefix.*

Once the maximum playing time $T_{max}$ to play the current segment S1 has been obtained, the client terminal 100 can determine whether a representation for next segment S2 can be downloaded, doing computations as previously described.

In particular, when the player 104 plays the current segment S1 up to $T_{max}$, then the time to request the next segment S2 is defined by the maximum between $T_{max} - \dfrac{\beta+2}{fps}$ and $T_{current}$, i.e.:

$$T_{req} = \max\left(T_{max} - \frac{\beta+2}{fps}, T_{current}\right)$$

When no $BR_{next}$ value allows to download the next segment S2 displayable prefix in due time by requesting it at the determined $T_{req}$, the player 104 may check if there is one or more values of $BR_{next}$ which allow the next segment S2 to be downloaded in time when immediately requested.

If such a $BR_{next}$ value exists, there is an associated deadline for the request time $T_{req}$ allowing a proper download of the next segment S2, as previously described. The player 104 may then abort the downloading of the current segment S1, so that the request for the next segment S2 at its associated $T_{req}$ will be received in due time. Namely, the player 104 should abort the download of the current segment S1 so that its reception ends no later than time $T_{req}$ + RTT.

When several $BR_{next}$ values are available for a proper download with a shortened download of the current segment S1, the player 104 can make a selection between these values. In particular, this selection should maximize the overall quality, which is a compromise between the duration during which the current segment S1 can be played and the $BR_{next}$ value used for the next segment S2. The overall quality can be computed as a utility function. In an illustrative but non-limitative example, the utility function is defined by:

$$BR_{current} \; x \; (T_{abort} - T_{current}) + BR_{next\text{-}candidate} \; x \; D$$

wherein:

- $BR_{current}$ corresponds to the bit-rate of the current segment S1 representation;
- $BR_{next\text{-}candidate}$ is one of the $BR_{next}$ values determined for proper download with a shortened download of the current segment S1;
- $T_{abort}$ denotes the end of the playing time of the current segment S1 when aborting its download acccording to the required reception time of S2 using $BR_{next\text{-}candidate}$.

This utility function can be computed for each possible $BR_{next\text{-}candidate}$ and associated $T_{abort}$. The candidate values providing the maximum for the utility function are then chosen.

When no value for $BR_{next}$ allows a proper download of the next segment S2, the player 104 cannot play the next segment S2 and will skip it. The current segment S1 is still be aborted at time $T_{max}$ to avoid loading useless data.

Figure 12 shows an example of the abortion of a segment which fails to be displayed up to the end.

It is assumed that at the start of the playback, the player 104 has some margin obtained when the previous period was normal.

While the player 104 is downloading and playing PBBPBBP frames of a same current segment, the network bandwidth is divided by (e.g.) a factor two. So that, from B'1 frame, the download time of every frame is doubled.

The player 104 detects the change in network bandwidth, e.g. after reception of frame B'1 and can then re-estimate the $T_{fin}$ for the current segment to assess that the display of the current segment will not be able to end.

As shown in Figure 12, the decoding operation gradually catches up with the downloading. After decoding frame B'2, the player 104 should feed the high-quality decoder 104B with the data of frame P". But, this frame P" will not be received at that time, so that the last frame to be decodable will be the frame B'2. In display order, the frame B'2 will be displayed followed by frame P' which was previously decoded. The display end time corresponds to the end of the display of the frame P'.

Having determined that the frame P" will fail to be decoded, the player 104 can decide to abort the download, targeting reception of the current segment up to the frame B'2 included (the frame P" being excluded).

At the same time, the player 104 can select a next segment to be requested, so that next segment data will begin to be received as soon as possible after the frame B'2 (just after it when possible).

According to the present principles, the client terminal 10 (e.g. through its player 104) can implement a new strategy for managing the two streams (i.e. the high-quality stream and the low-quality stream). When the network bandwidth becomes lower, the zero buffering for the high-quality stream will prevent from downloading the high-quality segment in due time for display. While the known implementation of an HAS player would stop the rendering when at least one of the components is not available, according to the present principles, the client terminal can accept to continue playing the immersive video processing the low-quality stream when the high-quality stream is missing.

With the zero-buffering strategy of the present principles, the current segment of high-quality stream is still downloading while the first part of it is being already displayed. When the network conditions change, the download can be slowed down and, at some point in time, the player can determine that the display of this segment in high quality up to the end of the segment becomes impossible (for lack of data in due time). This case provides the opportunity for the player to:

- stop the current downloading (this can be done by closing a TCP connection, by performing small byte-range requests in a pipeline that can then be interrupted, or by using a protocol such as HTTP/2 which allows streams control);
- consider the option of immediately starting the download of a further segment of high quality video, taking the new network bandwidth into account in the segment selection.

In the context of a viewport dependent immersive adaptive streaming (spherical or panoramic) wherein a plurality of video representations covering altogether the entire scene (spherical or panoramic) exists and wherein a sub-set of such video representations is selected according to the end-user gaze (i.e. the viewport), the present principles allow to minimize the time between the user gaze change (new viewport position) and the current display at high quality of the corresponding area.

References disclosed in the description, the claims and the drawings may be provided independently or in any appropriate combination. Features may, where appropriate, be implemented in hardware, software, or a combination of the two.

Reference herein to "one embodiment" or "an embodiment" means that a particular feature, structure, or characteristic described in connection with the embodiment can be included in at least one implementation of the method and device described. The appearances of the phrase "in one embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

Although certain embodiments only of the disclosure have been described herein, it will be understood by any person skilled in the art that other modifications, variations, and possibilities of the disclosure are possible. Such modifications, variations and possibilities are therefore to be considered as falling within the spirit and scope of the disclosure and hence forming part of the disclosure as herein described and/or exemplified.

The flowchart and/or block diagrams in the Figures illustrate the configuration, operation and functionality of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, or blocks may be executed in an alternative order, depending upon the functionality involved. It will also be noted that each block of the block diagrams and/or flowchart illustration, and combinations of the blocks in the block diagrams and/or flowchart illustration, can be implemented by special purpose hardware-based systems that perform the specified functions or acts, or combinations of special purpose hardware and computer instructions. While not explicitly described, the present embodiments may be employed in any combination or sub-combination.

**Claims**

1. A method for managing, at a terminal (100), a streaming session of an immersive video (10) spatially tiled with a set of tiles (400) and stored on a network equipment (300) available at one or more representations, a tile (400) covering a portion of a scene of the immersive video (10), said immersive video (10) being temporally divided into a plurality of video segments, a video segment being further defined by a plurality of tile segments, a tile segment being associated with a tile (400) of the set of tiles,
said method comprising:

- playing (700) one or more current tile segments of a current video segment at a current representation while completing the downloading of said one or more current tile segments at the terminal.

2. The method according to claim 1, comprising:

- determining (704, 707) a time to request one or more next tile segments subsequent to the one or more current tile segments.

3. The method according to claim 2, wherein the time to request depends on a remaining time for completing the downloading of said one or more current tile segments.

4. The method according to claim 3, wherein the time for completing the downloading of said one or more current tile segments depends on:

- a current time,
- a ratio between a bit-rate of the current representation and a current network bandwidth,
- a duration of the current video segment, and
- a percentage of data of the one or more current tile segments already received.

5. The method according to claim 4, wherein the time for completing the downloading of said one or more current tile segments is defined by:

$$T_{fin} = T_{current} + N \times D \times \frac{100 - X}{100}$$

wherein:

- $T_{fin}$ is the time for completing the downloading of said one or more current tile segments,
- $T_{current}$ corresponds to the current time,
- $N \times D \times \frac{100 - X}{100}$ is a remaining time to complete the downloading of said one or more current tile segments, with:

  ▪ X being the percentage of data of the one or more current tile segments already received,
  ▪ N being the ratio between a bit-rate of the current representation and the current network bandwidth,

- D is the duration of the current video segment.

6. The method according to claims 3 to 5, wherein, when the time for completing the downloading of said one or more current tile segments is lower than a first time threshold, the time to request is equal to the first time threshold.

7. The method according to claim 6, wherein the first time threshold is defined as follows:

$$T_0 + \alpha D - RTT$$

wherein:

- $T_0$ is a start time of playing the one or more current tile segments,
- $\alpha$ is a downloading ratio defined as to the part of the one or more tile segments to be loaded before playback,
- D is the duration of the current video segment,
- RTT is a Round Trip Time between the terminal and the network equipment.

8. The method according to claims 3 to 7, wherein, when the time for completing the downloading of said one or more current tile segments is higher than the first time threshold but lower than a second time threshold, the time to request is given by:

$$T_{req} = \max(T_{fin} - RTT, \qquad T_{current})$$

wherein:

- $T_{req}$ is the time to request the one or more next tile segments,
- $T_{fin}$ is the time for completing the downloading of said one or more current tile segments,
- $T_{current}$ corresponds to the current time,
- RTT is a Round Trip Time between the terminal and the network equipment.

9. The method according to claim 8, further comprising, when the time to request is obtained, determining (708) whether a next representation for the one or more next tile segments can be downloaded up to a downloading ratio, defining the part of the one or more current tile segments to be loaded before playback, before the end of the playback of the one or more current tile segments.

10. The method according to preceding claim 9, further comprising:

- skipping (710) the one or more next tile segments when none of the available representations of the immersive video can be downloaded up to the downloading ratio, before the end of the playback of the one or more current tile segments.

11. The method according to preceding claim 10, further comprising:

- when the one or more next tile segments are skipped, requesting one or more subsequent tile segments following the one or more next tile segments skipped, at a time to request defined by:

$$T_{req} = T_0 + (1 - \alpha) \times D - RTT$$

wherein:

- $T_0$ is a start time of playing the one or more current tile segments,
- $\alpha$ is the downloading ratio defined as to the part of the one or more tile segments to be loaded before playback,
- D is the duration of the current video segment,
- RTT is the Round Trip Time between the terminal and the network equipment.

12. A terminal for managing a streaming session of an immersive video (10) spatially tiled with a set of tiles (400) and stored on a network equipment (300) available at one or more representations, a tile covering a portion of a scene of the immersive video, said immersive video (10) being temporally divided into a plurality of video segments, a video segment being further defined by a plurality of tile segments, a tile segment being associated with a tile (400) of the set of tiles,
said terminal (100) comprising one or more memories (106) and one or more processors (104, 105) configured to play (700) one or more current tile segments of a current video segment at a current representation while completing the downloading of said one or more current tile segments at the terminal (100).

13. The terminal according to claim 12, wherein the one or more processors are further configured to determine (704, 707) a time to request one or more next tile segments subsequent to the one or more current tile segments.

14. The terminal according to claim 13, wherein the time to request depends on a time for completing the downloading of said one or more current tile segments.

15. The terminal according to claim 14, wherein, when the time for completing the downloading of said one or more current tile segments is lower than a first time threshold, the time to request is equal to the first time threshold.

100

N1

200

N2

300

## FIG.1

100

Client terminal

101 — Interface of connection

102 — **Communicating circuitry**

103 — **Streaming controller**

104 — Video player

104A — LQ decoder

104B — HQ decoder

104C — Renderer

105 — Processor

106 — Storing means

107

## FIG.2

400

10

300

Video Chunk Files

N1, N2

100

# FIG.3

VP

400

10

# FIG.4

FIG.5

FIG.6

FIG.7

Req(S1)    Req(S2)    Req(S3)    Req(S4)

Download:    | S1 | S2 | S3 | S4 |

Display:                          |←2/fps→|  | S1 | S2 |

RTT

T0      T0+D      Time

## FIG.8

Req(S1)    Req(S2)    Req(S3)    Req(S4)

Download:    | S1 | S2 | S3 |

Display:        | S1 | S2 | S3 |

RTT  α x D

T0      T0+D      Time

## FIG.9

Download:  | P | B1 | B2 | S2 |

Decoding:       | P | B1 | B2 | S2 |

Display:             | B1 | B2 | P | S2 |

T0+D-3/fps      T0+D      Time

## FIG.10

Req(S2)

Download:     I     P1 B1 B2 P2 B3

Decoding:     I  P1  B1  B2  P2  B3

Display:      2/fps   I  B1  B2  P1  B3

RTT ← α x D →

T0+D          Time

Max T$_{fin}$

## FIG.11

Abort P''
Throughput/2   Req(next)

Download:  P  B1 B2 P'   B'1    B'2    Next segment
                                       P''   B'1   B'2

Decoding:     P  B1 B2 P' B'1 B'2 P''

Display:      B1 B2 P B'1 B'2 P' B''1

Detect N=2              Display end

## FIG.12

Europäisches
Patentamt

European
Patent Office

Office européen
des brevets

# EUROPEAN SEARCH REPORT

Application Number

EP 17 30 6837

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | WO 2017/205794 A1 (VID SCALE INC [US])<br>30 November 2017 (2017-11-30)<br>* paragraph [0002] - paragraph [0067];<br>figure 6 * | 1-5,<br>12-14<br>6-11,15 | INV.<br>H04N21/218<br>H04N21/2343<br>H04N21/4728<br>H04N21/637 |
| X<br>A | US 2017/347026 A1 (HANNUKSELA MISKA [FI])<br>30 November 2017 (2017-11-30)<br>* paragraph [0017] - paragraph [0277] * | 1-5,<br>12-14<br>6-11,15 | H04N21/6587<br>H04N21/81<br>H04N21/845 |
| E | WO 2018/049221 A1 (VID SCALE INC [US])<br>15 March 2018 (2018-03-15)<br>* paragraph [0002] - paragraph [0085];<br>figures 6,7,10,19,25 * | 1-5,<br>12-14 | |
| A | EP 2 824 885 A1 (ALCATEL LUCENT [FR])<br>14 January 2015 (2015-01-14)<br>* abstract * | 1-15 | |
| A | US 2017/118540 A1 (THOMAS EMMANUEL [NL] ET<br>AL) 27 April 2017 (2017-04-27)<br>* abstract * | 1-15 | |

TECHNICAL FIELDS
SEARCHED      (IPC)

H04N

The present search report has been drawn up for all claims

| Place of search | Date of completion of the search | Examiner |
|---|---|---|
| The Hague | 17 May 2018 | Santos Conde, José |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

&  : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 17 30 6837

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2018

| Patent document cited in search report | | Publication date | Patent family member(s) | | Publication date |
|---|---|---|---|---|---|
| WO 2017205794 | A1 | 30-11-2017 | NONE | | |
| US 2017347026 | A1 | 30-11-2017 | US 2017347026 A1 | | 30-11-2017 |
| | | | WO 2017203098 A1 | | 30-11-2017 |
| WO 2018049221 | A1 | 15-03-2018 | NONE | | |
| EP 2824885 | A1 | 14-01-2015 | NONE | | |
| US 2017118540 | A1 | 27-04-2017 | CN 106664443 A | | 10-05-2017 |
| | | | EP 3162074 A1 | | 03-05-2017 |
| | | | JP 2017527160 A | | 14-09-2017 |
| | | | KR 20170018352 A | | 17-02-2017 |
| | | | US 2017118540 A1 | | 27-04-2017 |
| | | | WO 2015197815 A1 | | 30-12-2015 |

For more details about this annex : see Official Journal of the European Patent Office, No. 12/82

EPO FORM P0459